# EUROPEAN PATENT APPLICATION

(11) **EP 1 376 429 A2**
(43) Date of publication of application: **02.01.2004**
(21) Application number: 03011328.6
(22) Date of filing: 19.05.2003
(51) Int. Cl.: G06F 17/60, G06F 17/30

(54) **Method for the processing, management and automatic search for data**

(30) Priority: 20.05.2002 IT UD20020106
(71) Applicant: K Communication SpA, 35100 Padova (IT)
(72) Inventor: Di Nuzzo, Fabio, 35036 Montegrotto, Terme (PD) (IT); Di Paolo, Vicenzo, 30037 Scorze (VE) (IT); Raffaelli, Alberto, 35128 Padova (IT)
(74) Representative: Petraz, Gilberto

(57) **Abstract**

Method (10) for filing and automatically searching for data inserted previously, by a plurality of persons, on a registration support (20). The method (10) provides a first encoding step (13) during which each datum, or group of data, is associated with a particular identification code (24) and is classified according to the relative identification code (24); a second processing step (17) to process the data, in which the latter are ordered according to the respective identification codes (24) as a function of the type of search desired, according to the information requested; a third presentation step (19) wherein the data, classified and ordered, are presented to the searcher doing the search, or made available for internal use or publication on other supports.

## Description

### FIELD OF THE INVENTION

The present invention concerns a method for the processing, management and automatic search for data relating to television programs already broadcast, and to persons. To be more exact, the present invention is particularly suitable to collect and file transmission data and general and/or specific data of persons, obviously obtained with their consent, for example to be enrolled in particular clubs, societies, associations, waiting lists or suchlike, so that the data can be easily consulted according to the type of information that is requested by a searcher accessing the archive.

### BACKGROUND OF THE INVENTION

It is known that the filing and the search for data concerning persons, while respecting their privacy, are normally performed by inserting the data in specific paper or electronic forms wherein, so that they can be consulted by searchers, it is necessary to search for the originally completed forms and to visually select all the information desired piece by piece, sometimes being also necessary to transcribe them onto the forms or other registration supports.

This method leads to very long and complicated searches and is normally resolved by creating special archives, according to the topic, wherein, by addressing the archive desired, one can access the whole desired type of information on a person or groups of persons.

However, the creation of specific archives requires a lot of space, both physical, in the case of paper supports, and also of electronic memory, in the case where the data are filed in electronic calculators. With conventional methods, moreover, there is always the possibility of losing some of the information contained in the archives, it is difficult to search for the information desired, it is necessary to periodically order and control the different archives, and so on.

Applicant has devised and embodied the present invention to overcome these shortcomings of the state of the art and to obtain other advantages, such as for example the need to file broadcasts made.

### SUMMARY OF THE INVENTION

The present invention is set forth and characterized essentially in the main claim, while the dependent claims describe other innovative characteristics of the present invention.

The purpose of the present invention is to perfect a method for collecting and automatically searching for data, which will allow to consult said data by topic, particularly but not necessarily referred to persons, without needing to visually select the information contained piece by piece, or to create further archives by topic in order to catalog the information received, such as the content of lessons.

In accordance with this purpose the method for filing and automatically searching for information according to the present invention provides that the compilers, secretaries or the persons directly concerned, and with their consent, insert their data, both general and specific; each datum inserted is initially encoded, that is, associated with a particular identification code, and thus classified; subsequently the data are ordered according to the aforesaid identification codes, as a function of the type of search to be performed; finally, the data are presented to the searcher who is carrying out the search or made available for their internal use or for publication on other supports, such as the web or otherwise, for example for broadcasts recorded.

In this way, the data collected and filed can be consulted easily, and possible lessons, meetings or otherwise that the user has not followed directly can also be consulted more easily. Therefore, when a certain type of data is requested, only the data relating to that type, or similar data, will be proposed, such as the state of occupation of the persons, their last job, or suchlike, since such data have been encoded so that they are proposed only if this specific search is made.

Moreover, it is also possible to make searches by exclusion, that is, to exclude all the persons who do not possess a certain type of requirement, for example a previous experience in a particular field of work, thus considerably reducing the number of persons among whom it is necessary to search in order to find the one or ones needed.

### BRIEF DESCRIPTION OF THE DRAWINGS

These and other characteristics of the present invention will become apparent from the following description of a preferential form of embodiment, given as a non-restrictive example, with reference to the attached drawings wherein:
- fig. 1 shows a block diagram of the method for the filing and the automatic search according to the present invention;
- fig. 2 shows an example of a form by means of which it is possible to have people insert the data for filing.

### DETAILED DESCRIPTION OF A PREFERENTIAL FORM OF EMBODIMENT OF THE INVENTION

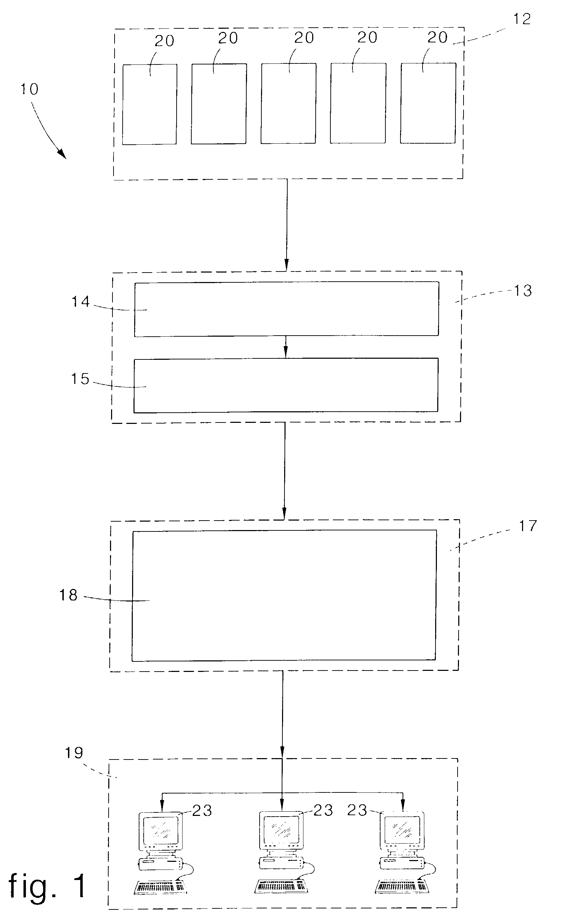

With reference to fig. 1, a method 10 for filing and automatically searching for data according to the present invention is applied, in this case, in the registration of persons in a job center, and comprises a registration step 12 to register the persons' data, obviously with their consent, an encoding step 13 to encode the data inserted, a processing step 17 to process the encoded data and a presentation step 19 to present the data requested by searchers, such as employers, who consult the center.

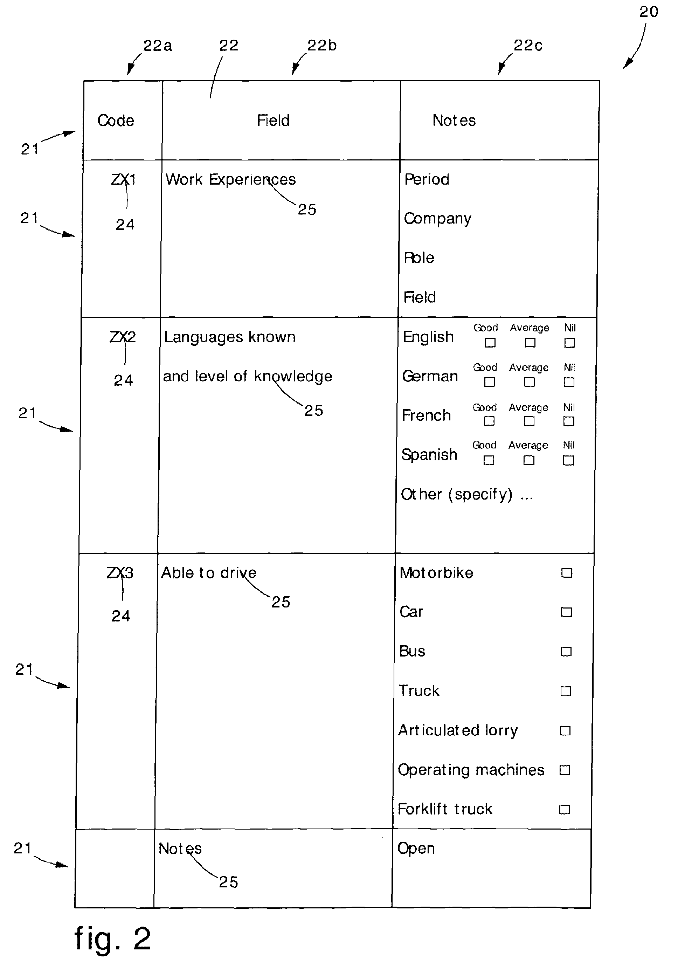

The registration step 12 provides to insert the data of the persons on forms 20 (fig. 2), of a paper or electronic type, on which both the personal data of each individual are inserted and also the specific data relating to their previous work activity, their monthly salary, specific abilities, particular timetabling needs, or otherwise.

The forms 20 are organized according to a pattern formed by a plurality of lines 21 and columns 22, wherein each line 21 is divided into three columns 22, which comprise a first column 22a, wherein an identification code 24 is pre-printed, a second column 22b, wherein a specific request 25 is pre-printed, for example "Indicate previous work experience", or "Indicate languages known and the level of knowledge", or otherwise, and a third column 22c, wherein the person inserts the data requested. In this third column 22c the responses can be of the open type, that is, free, or guided, that is, the person has to choose between one or more pre-printed responses, so as to supply a possible searcher with a greater uniformity of responses given by the persons.

The encoding step 13 comprises a first associating sub-step 14 to associate the data inserted in the third column 22c with the identification codes 24, and a second classifying sub-step 15 to classify the data according to the code 24 assigned in the previous sub-step 14.

The data processing step 17 comprises an ordering sub-step 18 to order the data according to the code 24 and as a function of the type of request which the searcher makes.

The data presentation step 19 provides the exclusive presentation of the data requested by the searcher, without obliging the latter to select the data that he is interested in directly from the forms 20. In fact, during this step 19, depending on the request made, for example "professional report", the method proposes, apart from some personal data, only the data concerning the last occupation, training experience, knowledge of languages, or otherwise, of each person.

The data requested are able to appear on one or more processors 23, so as to create a plurality of search stations which supply immediately all the data requested by the searchers.

The data are processed by each processor 23 in any conventional manner which is not relevant to the present invention.

It is clear, however, that modifications and/or additions of parts can be made to the method 10 as described heretofore, without departing from the field and scope of the present invention.

It is also clear that, although the present invention has been described with reference to specific examples, a person of skill in the art shall certainly be able to achieve many other equivalent forms of method for filing and automatically searching for data, all of which shall come within the field and scope of the present invention.

## Claims

1. Method for filing and automatically searching for data inserted by a plurality of persons, wherein said data are previously inserted on a registration support (20), **characterized in that** it provides a first encoding step (13), during which each datum, or group of data, is associated with a particular identification code (24) and is classified according to the relative identification code (24); a second processing step (17) to process said data, in which said data are ordered according to the respective identification codes (24) as a function of the type of search desired, according to the information requested; and a third presentation step (19), wherein said data, previously classified and ordered, are presented to the searcher doing the search, or made available for their internal use or publication on other supports.

2. Method as in claim 1, **characterized in that** said first encoding step comprises a first associating sub-step (14) to associate said data inserted with said identification codes (24), and a second classifying sub-step (15) to classify said inserted data according to the identification code (24) assigned in said first associating sub-step (14).

3. Method as in claim 1, **characterized in that** said second processing step (17) comprises an ordering sub-step (18) to order said data according to said identification code (24) and as a function of the type of request made by the searcher.

4. Method as in claim 1, **characterized in that** said presentation step (19) provides to use one or more search stations, each one equipped with a processor (23) by means of which the searcher can access said data.

5. Method as in claim 1, **characterized in that** said registration support comprises an electronic-type form (20).

6. Method as in claim 1, **characterized in that** said registration support comprises a paper-type form (20).

7. Method as in claims 5 or 6, **characterized in that** said form (20) comprises a plurality of lines (21) and a plurality of columns (22) able to define fields in which to insert said data.

8. Method as in claim 7, **characterized in that** there are three columns (22), respectively a first column (22a) wherein said identification code (24) is pre-printed, a second column (22b) wherein a specific request (25) for data is pre-printed, and a third column (22c) wherein the person inserts said requested data.

9. Method as in claim 8, **characterized in that** said third column (22c) provides both free, or open, responses, and also guided responses in order to make the types of data inserted uniform.
